# EUROPÄISCHE PATENTSCHRIFT

(11) **EP 2 434 618 B1**
(45) Veröffentlichungstag und Bekanntmachung des Hinweises auf die Patenterteilung: **19.03.2014**
(21) Anmeldenummer: 10179247.1
(22) Anmeldetag: 24.09.2010
(51) Int. Cl.: H02K 9/04, H02K 1/27, H02K 1/32

(54) **Segmentläufer einer elektrischen Maschine**
Segmented rotor of an electric machine
Rotor à segment d'une machine électrique

(43) Veröffentlichungstag der Anmeldung: 28.03.2012
(73) Patentinhaber: Siemens Aktiengesellschaft, 80333 München (DE)
(72) Erfinder: Grillenberger, Reiner, 91575 Windsbach (DE); Gömmel, Gerhard, 92353 Postbauer-Heng (DE); Koch, Thomas, 90459 Nürnberg (DE); Sprockhoff, Olaf, 90584 Allersberg (DE); Streng, Klaus, 90441 Nürnberg (DE)

(56) Entgegenhaltungen:
- WO-A2-98/26495
- DE-A1-102006 061 372
- JP-A- 2010 088 182

## Beschreibung

Die Erfindung betrifft eine elektrische Maschine, welche einen Läufer und einen Stator aufweist.

Aus der WO 98/26495 A2 ist ein Läufer bekannt, welcher eine Vielzahl von Segmenten aufweist, wobei die Segmente Permanentmagnete aufweisen und Schaufelförmige Wände an den Segmenten angeordnet sind.

Aus der DE 10 2006 061372 A1 ist ebenfalls eine elektrische Maschine bekannt, welche einen Läufer mit einer Vielzahl von Segmenten aufweist. Die Segmente sind als Teilblechpakete ausgebildet. Permanentmagnete sind in jedem der Teilblechpakete in innenliegenden Taschen angeordnet.

Auch aus der JP 2010 088182 ist eine elektrische Maschine mit segmentiertem Läufer und mit Permanentmagneten bekannt.

Eine Aufgabe der vorliegenden Erfindung ist es einen Läufer einer elektrischen Maschine derart auszubilden, dass dieser in einfacher und flexibler Weise aufgebaut werden kann, wobei dabei insbesondere eine gute Kühlung zu berücksichtigen ist.

Eine Lösung der Aufgabe ergibt sich bei einem Gegenstand nach einem der Ansprüche 1 bis 4.

Ab einer bestimmten Leistung einer elektrischen Maschine kann es sich ergeben, dass eine axiale Belüftung des Läufers alleine über Kühlnuten bei permanent erregten elektrischen Maschinen nicht mehr ausreicht um die entstehende Verlustwärme abzuführen. Eine zusätzliche Kühlwirkung kann mittels einer Radialbelüftung erzielt werden. Teilt man einen PEM-Läufer, also einen Läufer einer permanent erregten Synchronmaschine, mit innen liegenden, insbesondere versenkten Magneten, in Teilpakete mit Radialbelüftung auf, so kann die Abfuhr von Wärmeenergie erhöht werden. Die Teilpakete bilden dabei Segmente des Läufers der elektrischen Maschine. Bei der Aufteilung des Läufers in zwei oder mehr Segmente ist nunmehr auch ein segmentweise Bestückung und/oder Fixierung der Permanentmagnete möglich. Auch ein Verguss der Permanentmagnete des Läufers kann segmentweise erfolgen. Dies bedeutet, dass eine Vielzahl von Segmenten eines Läufers zunächst vergossen werden, um die Segmente hernach zu einem Läufer zusammenzusetzen. Dadurch lassen sich auch abhängig von der Anzahl der verwendeten Segmente, unterschiedliche Längen des Läufers herstellen. Dabei sind die Permanentmagnete in einem bestimmten Segment fixierbar, ohne dass eine direkte Fixierung zu weiteren Segmenten vorliegt. Indirekt können die Permanentmagnete in ihrer Position auch zu anderen Segmenten fixiert sein, indem die Segmente selbst zueinander fixiert sind. Dies kann z.B. mittels eine Presspassung auf einer Welle erfolgen, mittels einer Verklebung, mittels Schraub-, Niet- oder Klemmverbindungen, usw.

In einer Ausführungsform ermöglicht eine einzige radiale Belüftung in der Mitte des Läufers eine Belüftung des Läufers bzw. der elektrischen Maschine. Der Läufer ist dabei derart ausführbar, dass dieser zwei Segmente mit Magneten aufweist. Ein Segment auf einer Antriebsseite und ein Segment auf einer Bedienseite der elektrischen Maschine. Die jeweiligen Segmente weisen Elektrobleche auf und bilden Teilpakete des Läufers aus.

In einer weiteren Ausführungsform weist der Läufer nicht nur zwei sondern drei oder mehr Segmente auf, wobei zwischen den Segmenten eine Belüftung vorgesehen ist. Damit lässt sich nicht nur eine Belüftung z.B. in der Mitte des Läufers realisieren sondern es lassen sich eine Vielzahl von Belüftungen realisieren. Eine Belüftung weist beispielsweise ein Lüfterrad und/oder Luftschaufeln zur Hervorrufung eines Kühlluftstromes auf.

Ein Läufer einer elektrischen Maschine kann also eine Vielzahl von Segmenten aufweisen, wobei die Segmente Permanentmagnete aufweisen. Zwischen den Segmenten kann dann eine Belüftung vorgesehen sein. Die Belüftung kann mittels eines Lüfters zwischen zwei Segmenten erfolgen.

Der Läufer weist durch die Segmentierung in die Segmente ein segmentiertes Läuferblechpaket auf. Das Läuferblechpaket ist modular in mehrere Teilblechpakete zerlegt. Verschieden Segmente weisen Teilblechpakete auf. Die Segmente wie auch die Teilblechpakete können separat gefertigt und mit Permanentmagneten bzw. mit Magnetmaterial bestückt werden. Dies zeigt, dass eine Magnetisierung beispielsweise auch erst dann erfolgt, wenn das Magnetmaterial bereits am Segment ist. Die Segmente, also das Magnetmaterial der Segmente, können einzeln oder in Gruppen magnetisiert werden.

In einer Ausgestaltung des Läufers weist ein Segment eine Endscheibe auf. Die Endscheibe kann die Funktion einer Druckplatte erfüllen.

In einer Ausgestaltung des Läufers weist ein Segment ein Endblech auf. Das Endblech verschließt die Nuten für die Permanentmagnete und dichtet diese vorzugsweise ab. Das Endblech und die Endscheibe können in einer Ausführungsform auch einteilig ausgeführt sein, ein Teil übernimmt dann folglich beide Funktionen.

In einer Ausgestaltung des Läufers weisen Segmente eine Vielzahl von Elektroblechen auf. Ein erstes Segment weist also ein erstes Paket von Elektroblechen auf. Ein zweites Segment weist ein zweites Paket von Elektroblechen auf, usw.

Damit lässt sich ein segmentiertes Blechpaket für den Läufer der elektrischen Maschine ausbilden.

In dem Läufer weist ein Segment ein Stegblech auf. Das Stegblech ist derart ausgebildet, dass es die Funktion einer Druckplatte erfüllt.

In einer Ausgestaltung des Läufers hält ein Befestigungselement ein Segment zusammen. Hierfür kann auch eine Vielzahl von Befestigungselementen vorgesehen sein.

In einer Ausgestaltung des Läufers sind Permanentmagnete an einem Segment derart fixiert, dass eine Vergussmasse die Permanentmagnete lediglich mit einem der Vielzahl von Segmenten verbindet. Der Verguss von Permanentmagneten erfolgt also Segmentweise. Die Segmente müssen untereinander keinen Verguss aufweisen.

Teilpakete eines Läufers können also jeweils zumindest eines der folgenden Merkmale aufweisen:
- eine Endscheibe, welche die Funktion einer Druckplatte erfüllt;
- ein Endblech, welches die Nuten für die Magnete verschließt und abdichtet;
- das eigentliche Teilblechpaket, welches die Elektrobleche enthält;
- Befestigungselemente (Schrauben, Niete, Klammern ... welche das Teilblechpaket zusammenhalten;
- Magnete (magnetisiert oder unmagnetisiert), die in das Teilpaket eingebracht werden; und/oder
- Eine Fixierung bzw. Imprägnierung der Magnete (Kleber, Vergussmasse, Klammern).

Die einzelnen Teilpakete können alle gleich lang ausgeführt sein, damit das Läufer-Paket modular verlängert oder verkürzt werden kann. Ebenso ist es möglich an thermisch kritischen Stellen im Läufer gezielt kürzere Pakete einzusetzen um die Kühlwirkung hier nochmals zu erhöhen.

Die Teilpakete können einzeln kalt oder warm auf die Welle aufgezogen und mit Zugankern (Schrauben, Bolzen, Niete etc.) und zwei Endscheiben auf der Welle des Läufers bzw. der elektrischen Maschine zusammengehalten werden. Die Welle kann, um die Montage zu vereinfachen, aus amagnetischem Stahl ausgeführt sein. Das Drehmoment wir über beispielsweise mittels Presssitz oder Passfeder auf die Welle übertragen.

Durch die Segmentierung ist es möglich, auch einen mit Magneten bestückten Läufer in beliebig viele Teilblechpakete aufzuteilen, zwischen welchen sich durch die radialengeordneten Stege eine Belüftung einstellt. Hierdurch kann die Wärmeabfuhr im Läufer gesteigert werden. Die modulare Bauweise zeigt viele Vorteile.

Mögliche Ausgestaltungen der Erfindung werden nachfolgend anhand der beigefügten Ausführungsbeispiele in den Zeichnungen näher erläutert. Darin zeigen:
- FIG 1: einen Läufer einer elektrischen Maschine;
- FIG 2: den Läufer der elektrischen Maschine in einer Explosionsdarstellung; und
- FIG 3: ein Segment des Läufers der elektrischen Maschine.

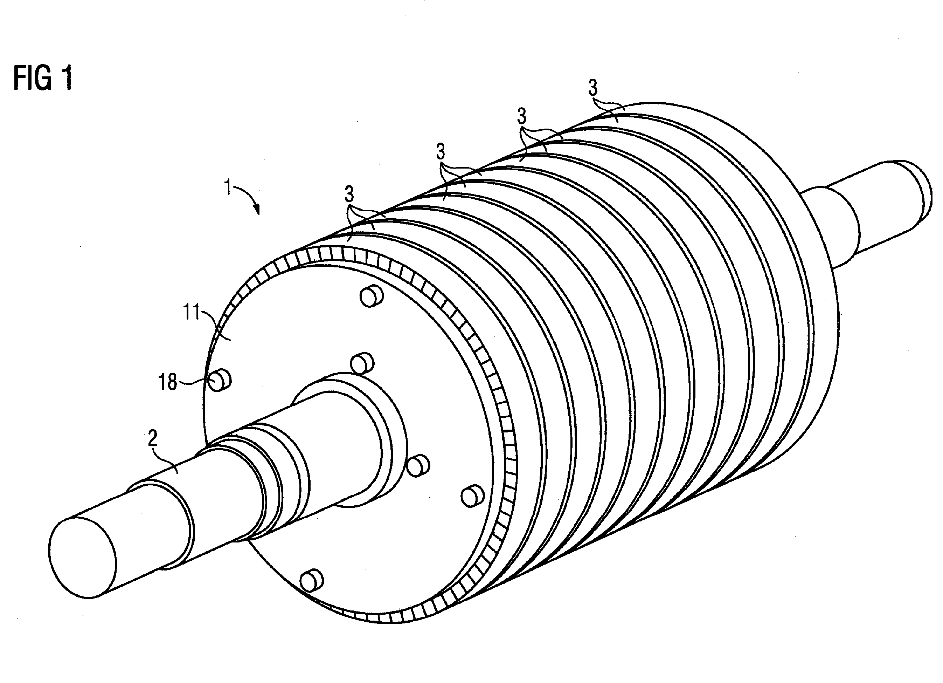

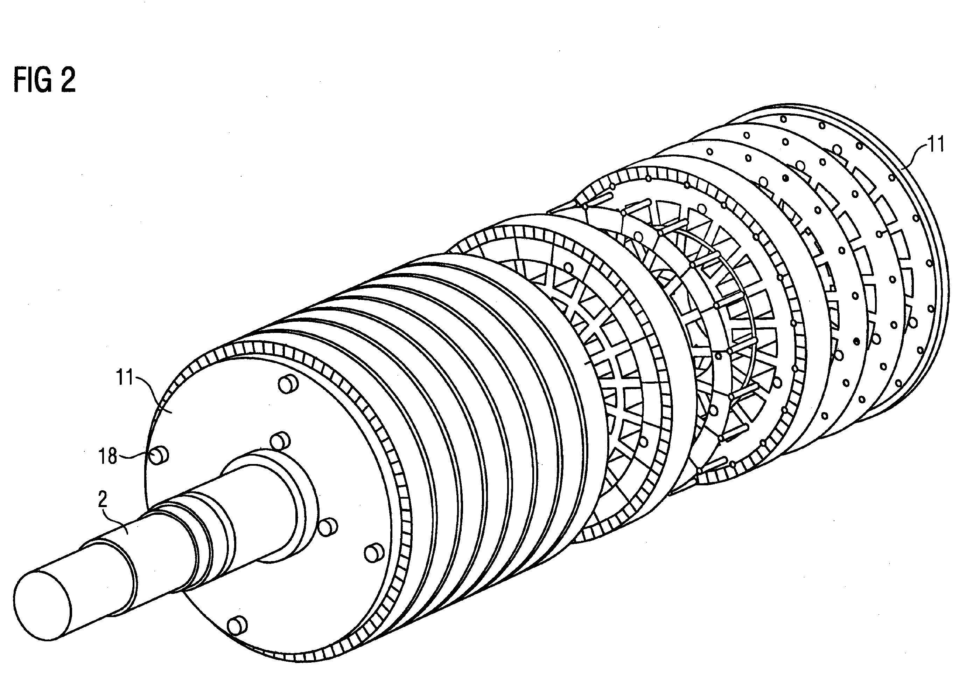

Die Darstellung gemäß FIG 1 zeigt einen Läufer 1, welcher eine Vielzahl von Segmenten 3 auf einer Welle 2 aufweist. Endbleche 11 schließen den Stapel von Segmenten ab, wobei Befestigungselemente 18 die Struktur halten. Die Darstellung gemäß FIG 2 zeigt den Aufbau des Läufers 1 in einer Explosionsdarstellung.

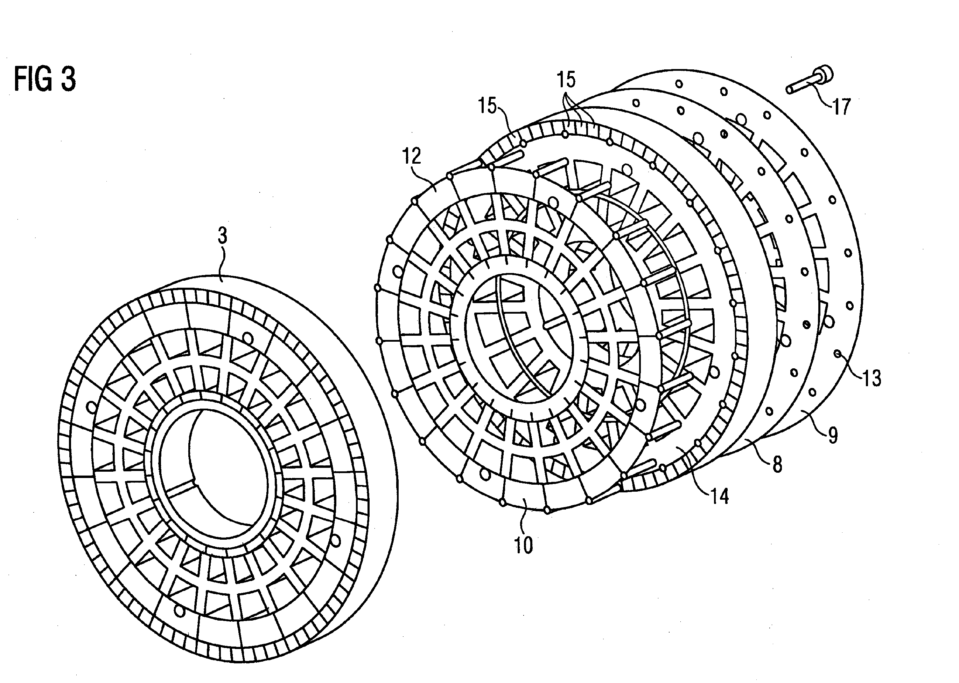

Die Darstellung gemäß FIG 3 zeigt ein Segment, sowie dessen Explosionsdarstellung. Das Segment weist eine Scheibenstruktur auf. Endscheiben 9 und 10 schließen die Segmentstruktur ab. Die Endscheibe 10 weist einen Lüfter 12 auf. An einer Trägerscheibe 14 befinden sich vergossene Permanentmagnete 15. Elektrobleche 8 sind zur Führung des magnetischen Flusses vorgesehen. Löcher 13 sind zur Durchführung von Befestigungsmitteln 17 vorgesehen, welche das Segment 3 zusammenhalten.

## Patentansprüche

1. Läufer (1) einer elektrischen Maschine, welcher eine Vielzahl von Segmenten (3) aufweist, wobei die Segmente (3) Permanentmagnete (15) aufweisen,
**dadurch gekennzeichnet, dass** zwischen zumindest zwei Segmenten (3) **ein Stegblech** angeordnet ist, **das die Funktion einer Druckplatte erfüllt und dessen Stege als Lüfter und Abstandshalter fungieren.**

2. Läufer (1) nach **Anspruch 1**,
**dadurch gekennzeichnet, dass** Segmente (3) eine Vielzahl von Elektroblechen (8) aufweisen.

3. Läufer (1) nach **Anspruch 1 oder 2**,
**dadurch gekennzeichnet, dass** Befestigungsmittel (17) ein Segment (3) zusammenhalten.

4. Läufer (1) nach einem der Ansprüche 1 bis 3,
**dadurch gekennzeichnet, dass** die Permanentmagnete (15) an einem der Vielzahl von Segmenten (3) derart fixiert sind, dass eine Vergussmasse die Permanentmagnete (15) lediglich mit diesem Segment (3) verbindet.

## Claims

1. Rotor (1) of an electrical machine comprising a plurality of segments (3), wherein the segments (3) comprise permanent magnets (15),
**characterised in that**
a web plate is arranged between at least two segments (3), said web plate fulfilling the function of a pressure plate and the plates of which function as fans and spacers.

2. Rotor (1) according to claim 1, **characterised in that** segments (3) comprise a plurality of electrical sheets (8).

3. Rotor (1) according to claim 1 or 2, **characterised in that** fastening elements (17) hold a segment (3) together.

4. Rotor (1) according to one of claims 1 to 3, **characterised in that** the permanent magnets (15) are fixed on one of the plurality of segments (3) such that a casting compound connects the permanent magnets (15) only with this segment (3).

## Revendications

1. Rotor (1) d'une machine électrique, qui a plusieurs segments ( 3 ), les segments ( 3 ) ayant des aimants ( 15 ) permanents,
**caractérisé en ce qu'**il est disposé, entre au moins deux segments ( 3 ), une tôle d'entretoisement, qui a la fonction d'une plaque d'application d'une pression et dont les entretoises servent de ventilateur et d'écarteur.

2. Rotor ( 1 ) suivant la revendication 1,
**caractérisé en ce que** les segments ( 3 ) ont une pluralité de tôles ( 8 ) électriques.

3. Rotor ( 1 ) suivant la revendication 1 ou 2,
**caractérisé en ce que** des moyens ( 17 ) de fixation maintiennent ensemble un segment ( 3 ).

4. Rotor ( 1 ) suivant l'une des revendications 1 à 3,
**caractérisé en ce que** les aimants ( 15 ) permanents sont immobilisés sur l'un de la pluralité des segments ( 3 ), de manière à ce qu'une composition de scellement relie les aimants ( 15 ) permanents seulement à ce segment ( 3 ).
